# EUROPEAN PATENT SPECIFICATION

(11) **EP 3 549 895 B1**
(45) Date of publication and mention of the grant of the patent: **21.09.2022**
(21) Application number: 19161153.2
(22) Date of filing: 06.03.2019
(51) Int. Cl.: B66B 1/46

(54) **ELEVATOR SERVICE REQUEST AND OFFLINE AUTHENTICATION OF THE ELEVATOR SERVICE REQUEST**
AUFZUGSWARTUNGSANFORDERUNG UND OFFLINE-AUTHENTIFIZIERUNG DER AUFZUGWARTUNGSANFORDERUNG
DEMANDE DE SERVICE D'ASCENSEUR ET AUTHENTIFICATION HORS LIGNE DE LA DEMANDE DE SERVICE D'ASCENSEUR

(30) Priority: 06.03.2018 CN 201810183270
(43) Date of publication of application: 09.10.2019
(73) Proprietor: Otis Elevator Company, Farmington, Connecticut 06032 (US)
(72) Inventor: ZHANG, Yu, PuDong, Shanghai 201206 (CN); LI, Kai, PuDong, Shanghai 201206 (CN); MA, Siqi, PuDong, Shanghai 201206 (CN); WANG, Shenhong, PuDong, Shanghai 201206 (CN); HOU, Haofeng, PuDong, Shanghai 201206 (CN)
(74) Representative: Dehns

(56) References cited:
- WO-A1-2017/051059
- WO-A1-2017/175020
- US-A1- 2012 253 658

## Description

### Technical Field

The present invention belongs to the field of elevator technologies, and relates to an elevator service request and offline authentication of an elevator service request, and specifically, to a system for an elevator service request, a method for an elevator service request, an authentication system for an elevator service request, and an authentication method for an elevator service request.

### Background Art

With development of elevator technologies, a variety of technologies for implementing an elevator service request operation automatically by a personal mobile terminal such as a smart phone have emerged. However, it is impossible that an elevator service request command from any personal mobile terminal is acceptable by an elevator system, and generally, according to a requirement of managing elevator access, an elevator service request command is authenticated to identify a passenger using the personal mobile terminal.

At present, an elevator service request is usually authenticated in an online mode between a personal mobile terminal and a server such as a cloud. Therefore, each elevator service request operation of the personal mobile terminal depends on real-time online wireless communication between the personal mobile terminal and the server. WO 2017/051059 discloses a computer controlled elevator, wherein a computer program sending service requests may be implemented in a mobile device. The mobile device communicates with a cloud and the allowability of a call can be verified in the cloud. US 2012/253658 discloses a mobile device which communicates with a server. The server is coupled to authorization systems. A visitor can select one or more destinations using the mobile device.

### Summary of the Invention

According to a first aspect of the present invention, an authentication method for an elevator service request is provided, as defined by claim 1.

In the authentication method according to an embodiment of the present invention, the authorized digital certificate and the elevator service request command are from the personal mobile terminal, and the authorized digital certificate is acquired based on authorization of the digital certificate management device to the personal mobile terminal.

The authentication method according to an embodiment of the present invention further comprises a step of:
returning, to the personal mobile terminal if the authorized digital certificate succeeds in the verification, a response result of the elevator system to the elevator service request command.

The authentication method according to an embodiment of the present invention further comprises a step of:
acquiring, by the personal mobile terminal, the authorized digital certificate in an online mode from the digital certificate management device.

In the authentication method according to an embodiment of the present invention, in the step of acquiring the authorized digital certificate, information is sent to the digital certificate management device for obtaining an identity verification code, and the authorized digital certificate is acquired from the digital certificate management device based on input of the identity verification code.

According to a second aspect of the present invention, an authentication system for an elevator service request is provided, as defined by claim 5.

In the authentication system according to an embodiment of the present invention, the receiving module is configured in a wireless beacon of an elevator system.

In the authentication system according to an embodiment of the present invention, the wireless beacon comprises a first wireless beacon installed in an elevator landing area of the elevator system and configured to broadcast a first wireless signal, wherein
the first wireless beacon is further configured to receive the sent authorized digital certificate and elevator service request command, wherein the elevator service request command is an elevator service request command indicating an elevator call request.

In the authentication system according to an embodiment of the present invention, the wireless beacon comprises a second wireless beacon installed in an elevator car of the elevator system and configured to broadcast a second wireless signal, wherein
the second wireless beacon is further configured to receive the sent authorized digital certificate and elevator service request command, wherein the elevator service request command is an elevator service request command indicating a destination floor.

In the authentication system according to an embodiment of the present invention, the receiving module is further configured to receive the authorized digital certificate and the elevator service request command from the personal mobile terminal, wherein the authorized digital certificate is acquired by the personal mobile terminal based on authorization of the digital certificate management device to the personal mobile terminal.

The authentication system according to an embodiment of the present invention further comprises:
the digital certificate management device configured to send the authorized digital certificate in an online mode to the personal mobile terminal.

According to a third aspect of the present invention, an elevator system is provided, comprising the authentication system for an elevator service request according to any of the foregoing aspects.

The foregoing feature and operations of the present invention will become more obvious according to the following descriptions and accompanying drawings.

### Brief Description of the Drawings

The foregoing and other objectives and advantages of the present invention will become more fully apparent with reference to the following detailed descriptions of the accompanying drawings, and the same or similar elements are represented by the same numerals.
FIG. 1 is a schematic diagram of an elevator system to which a system for an elevator service request according to an embodiment of the present invention is applied and an authentication system for an elevator service request according to an embodiment of the present invention is also applied;
FIG. 2 is a schematic diagram of an application scenario according to the elevator system shown in FIG. 1;
FIG. 3 is a schematic diagram of an authentication system for an elevator service request according to an embodiment of the present invention, and a system for an elevator service request according to an embodiment of the present invention is also schematically shown.
FIG. 4 is a flowchart of a method for an elevator service request according to an embodiment of the present invention; and
FIG. 5 is a flowchart of an authentication method for an elevator service request according to an embodiment of the present invention.

### Detailed Description

The present invention will be more completely described with reference to the accompanying drawings. Exemplary embodiments of the present invention are shown in the accompanying drawings. However, the present invention may be implemented in many different forms within the scope of the appended claims and should not be construed as being limited to the embodiments set forth herein. Rather, these embodiments are provided so that the disclosure will be thorough and complete, and will fully convey the concept of the present invention to those skilled in the art.

Some block diagrams shown in the accompanying drawings are functional entities that do not necessarily correspond to physically or logically independent entities. These functional entities may be implemented as software, one or more hardware modules or integrated circuits, or different processing apparatuses and/or microcontroller apparatuses.

In the following examples, a system for an elevator service request may be constructed by downloading or installing a corresponding application component or an APP for an elevator service request by a personal mobile terminal.

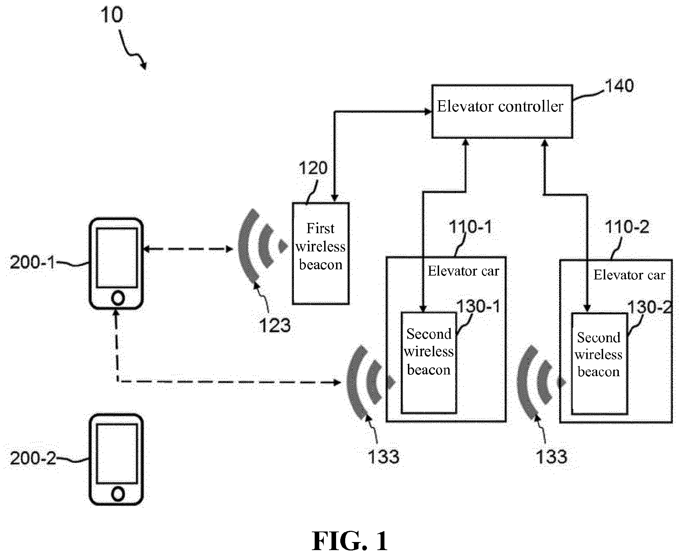

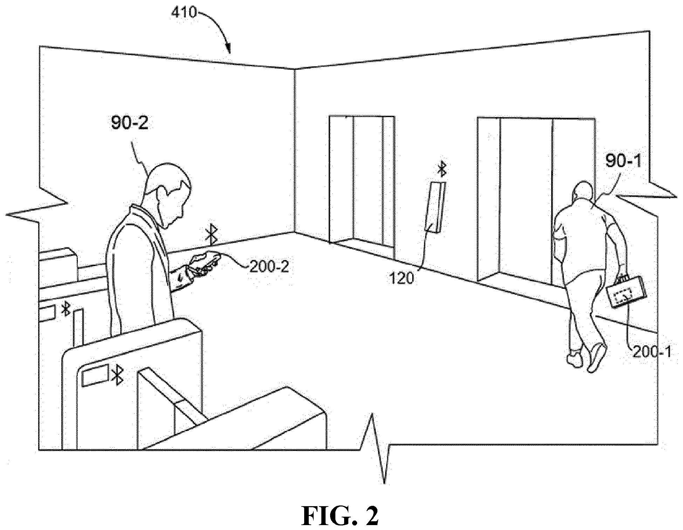

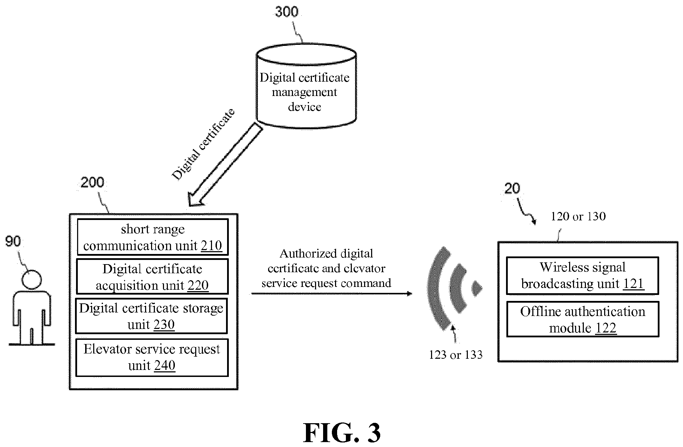

FIG. 1 is a schematic diagram of an elevator system to which a system for an elevator service request according to an embodiment of the present invention is applied and an authentication system for an elevator service request according to an embodiment of the present invention is also applied. FIG. 2 is a schematic diagram of an application scenario according to the elevator system shown in FIG. 1. FIG. 3 is a schematic diagram of an authentication system for an elevator service request according to an embodiment of the present invention, and a system for an elevator service request according to an embodiment of the present invention is also schematically shown. An authentication system 20 for an elevator service request and a personal mobile terminal 200 configured to implement a system for an elevator service request according to an embodiment of the present invention are described below in detail through examples with reference to FIG. 1, FIG. 2, and FIG. 3.

In an example of an elevator system 10, the elevator system 10 may be installed in various buildings. The elevator system 10 includes a plurality of elevator cars 110 that travel vertically in hoistways of a building. FIG. 1 shows two of the elevator cars, that is, elevator cars 110-1 and 110-2. An elevator controller 140 in the elevator system 10 performs control (such as scheduling control and travel control) of each elevator car 110, so that each elevator car 110 travels in the hoistway or stops at a corresponding landing. Generally, the elevator controller 140 needs to acquire an elevator service request command (for example, an elevator service request command indicating an elevator call request, that is, an elevator call request command) from an elevator landing area 410 on each floor to control operation of an elevator based on the command, for example, perform scheduling control of each elevator car 110. It will be understood that a specific control manner or control principle used by the elevator controller 140 to control one or more elevator cars 110 is not limited,, and a specific structure, an arrangement manner or the like of the elevator controller 140 is not limited.

To acquire an elevator call request command from each elevator landing area 410, a first wireless beacon 120 is provided in the elevator system 10. The first wireless beacon 120 may be installed in each elevator landing area 410 of the elevator system 10 (as shown in FIG. 2). For example, at least one first wireless beacon 120 is installed in the elevator landing area 410 on each floor, so that a first wireless signal 123 transmitted or broadcast by the first wireless beacon 120 can effectively and approximately cover at least each elevator landing area 410 to form a corresponding coverage range. It should be noted that the signal strength of the first wireless signal 123 broadcast by the first wireless beacon 120 attenuates with its broadcast distance, and the specific attenuation mode is not limited.

Further, as shown in FIG. 1 and FIG. 3, one or more second wireless beacons 130 (for example, second wireless beacons 130-1 and 130-2) may further be provided in the elevator system 10. Each second wireless beacon 130 is installed in a corresponding elevator car 110. For example, one second wireless beacon 130-1 is provided in the elevator car 110-1, and one second wireless beacon 130-2 is provided in the elevator car 110-2. In an embodiment, the second wireless beacon 130 is installed on a destination-floor registration control board in the elevator car 110 and is integrally provided on the destination-floor registration control board. A manner in which the second wireless beacon 130 is installed relative to the elevator car 110 is not limited to the foregoing example.

The second wireless beacon 130 may transmit or broadcast a second wireless signal 133, for example, broadcast the second wireless signal 133 continuously (for example, at a relatively short time interval). The signal strength of the broadcast second wireless signal 133 attenuates with its broadcast distance, and the specific attenuation mode is not limited. The second wireless signal 133 broadcast by the second wireless beacon 130 can approximately and effectively cover an area in the elevator car 110 in which the second wireless beacon 130 is installed to form a corresponding coverage range.

It should be noted that the second wireless beacon 130 is coupled to the elevator controller 140. Therefore, during operation of each elevator car 110, the second wireless beacon 130 can acquire desired information from the elevator controller 140 in real time. For example, the information is current floor information and travel direction information of the elevator car 110. In addition, the floor information and/or the travel direction information (the travel direction information includes, for example, "travel up", "travel down", and "halt") is packaged into a Bluetooth data signal or the like and is broadcast as the second wireless signal.

In an embodiment, the first wireless beacon 120 and/or the second wireless beacon 130 may be a Bluetooth module, or may specifically be a Bluetooth Low Energy (BLE) module. Correspondingly, the first wireless signal 123 transmitted or broadcast by the first wireless beacon 120 and/or the second wireless signal 133 transmitted or broadcast by the second wireless beacon 130 may be a Bluetooth signal (for example, a BLE signal).

In an embodiment, the first wireless signal 123 (for example, a BLE signal) may include a wakeup signal for waking up the personal mobile terminal 200. The personal mobile terminal 200 that senses the wakeup signal may wake up a corresponding application component (for example, an automatic elevator calling APP) of the personal mobile terminal 200 to work. Specifically, the first wireless signal 123 may further include a universally unique identifier (UUID) representing the identity of the first wireless beacon 120 and/or a data signal about floor location information of the first wireless beacon 120. The second wireless signal 133 may further include a UUID representing the identity of the second wireless beacon 130 and/or a data signal about current floor location information of the second wireless beacon 130.

Further, as shown in FIG. 1 to FIG. 3, personal mobile terminals 200 (personal mobile terminals 200-1 and 200-2) carried by passengers 90 may automatically complete an elevator service request operation in the elevator system 10 shown in FIG. 1 to implement the system for an elevator service request according to an embodiment of the present invention. Each personal mobile terminal 200 is configured to sense, when a distance condition is met, a wireless signal broadcast by a wireless beacon in the elevator system 10, for example, sense the first wireless signal 123 broadcast by the first wireless beacon 120, and sense the second wireless signal 133 broadcast by the second wireless beacon 130. In addition, in an embodiment, each personal mobile terminal 200 can automatically send, when a corresponding condition (for example, if the signal strength of the sensed wireless signal is greater than or equal to a corresponding threshold) is met, a corresponding elevator service request command to the wireless beacon in the elevator system 10. Therefore, an elevator service request operation can be completed without using a hand.

For example, in the application scenario shown in FIG. 2, even if a personal mobile terminal 200-1 of a passenger 90-1 is placed in a handbag, when the passenger 90-1 moves toward the first wireless beacon 120, the personal mobile terminal 200-1 can automatically complete an elevator service request operation. Alternatively, even if a passenger 90-2 is, for example, reading news instead of operating an application component for an elevator service request of a personal mobile terminal 200-2, when the passenger 90-2 moves toward the first wireless beacon 120, the personal mobile terminal 200-2 can automatically complete an elevator service request operation.

According to a requirement of managing elevator access, to prevent a passenger without entry permission from sending an invalid elevator service request command to a corresponding elevator by a personal mobile terminal to enter the corresponding elevator, authentication of each elevator service request command needs to be performed to verify the validity of the elevator service request command. The authentication system 20 for an elevator service request shown in FIG. 3 is proposed based on an elevator management requirement in the foregoing example.

As shown in FIG. 3, the authentication system 20 can, for example, communicate and interact with the personal mobile terminal 200. The personal mobile terminal 200 is used by the passenger 90. According to the invention, the authentication system 20 comprises a wireless beacon (for example, a Bluetooth module), which includes an offline verification module 122 provided at the first wireless beacon 120 and/or the second wireless beacon 130.

The personal mobile terminal 200 may be configured to send an authorized digital certificate and an elevator service request command to the wireless beacon, for example, the first wireless beacon 120 and/or the second wireless beacon 130, in the elevator system 10 that has established wireless communication with the personal mobile terminal 200. The authorized digital certificate is considered as a valid certificate by an administrator of the elevator system 10, and may specifically be a digital certificate formed of letter information. Specific content of the digital certificate may be, for example, content correspondingly stored in an RF card for entering an elevator. The digital certificate may, for example, be defined and generated in a digital certificate management device 300 of the authentication system 20. The digital certificate management device 300 can establish wireless communication with each personal mobile terminal 200 to send the authorized digital certificate to the personal mobile terminal 200 in an online mode.

The authorized digital certificate acquired by the personal mobile terminal 200 may include a terminal identifier of the personal mobile terminal 200, for example, a communication number or a mobile phone number, so that a third party may know a personal mobile terminal 200 or a passenger 90 to which the digital certificate is correspondingly granted.

In an embodiment, as shown in FIG. 3, a digital certificate acquisition unit 220 configured to acquire the authorized digital certificate is provided in the personal mobile terminal 200. The digital certificate acquisition unit 220 may send a request to the digital certificate management device 300 according to an operation of the passenger 90 to acquire the authorized digital certificate. In an example, the digital certificate acquisition unit 220 sends information (for example, a short message) to the digital certificate management device 300 for obtaining an identity verification code. The identity verification code is returned to the digital certificate acquisition unit 220 by the digital certificate management device 300 according to the terminal identifier of the personal mobile terminal 200. The digital certificate acquisition unit 220 may further acquire, for example, download the authorized digital certificate from the digital certificate management device 300 based on input of the identity verification code (for example, input to a corresponding APP component).

It will be understood that a specific method of acquiring the authorized digital certificate is not limited to the foregoing example.

In an embodiment, the authorized digital certificate has a corresponding authorization period. That is, the validity period or life period of an authorized digital certificate acquired each time may be limited. If the authorized digital certificate expires, it indicates that the digital certificate turns into an unauthorized digital certificate and cannot be verified successfully by the offline verification module 122 of the elevator system 10. Therefore, the elevator service request command will not be authenticated. The elevator system 10 will make a response such as a scheduling arrangement to the elevator service request command.

In an embodiment, as shown in FIG. 3, a short range communication unit 210 is provided in the personal mobile terminal 200. The short range communication unit 210 is configured to sense a wireless signal (for example, the first wireless signal 123 or the second wireless signal 133) broadcast by the wireless beacon (for example, the first wireless beacon 120 or the second wireless beacon 130) in the elevator system 10. The short range communication unit 210 is further configured to establish corresponding wireless communication with the wireless beacon (for example, the first wireless beacon 120 or the second wireless beacon 130). Certainly, as described above, a condition of establishing wireless communication may be predefined according to a requirement, and the condition is, for example, that the signal strength value of the sensed wireless signal needs to be greater than or equal to a corresponding threshold.

In an embodiment, as shown in FIG. 3, an elevator service request unit 240 is provided in the personal mobile terminal 200. The elevator service request unit 240 is configured to generate a corresponding elevator service request command, and may further be configured to associate the elevator service request command with the authorized digital certificate, so that the currently generated elevator service request command may correspond to or be associated with an authorized digital certificate stored in the personal mobile terminal 200 that generates the elevator service request command. The elevator service request command may include an elevator call request command and/or a destination-floor registration command. The elevator service request unit 240 may predefine a condition of generating the elevator service request command according to a requirement, and the condition is, for example, that the signal strength value of the sensed wireless signal needs to be greater than or equal to a corresponding threshold.

The short range communication unit 210 is further configure to send the associated elevator service request command and authorized digital certificate to the wireless beacon, that is, send both the elevator service request command and the authorized digital certificate. Specifically, the elevator service request command and the authorized digital certificate may be sent to a corresponding wireless beacon by currently established wireless communication. For example, when establishing wireless communication with the first wireless beacon 120, the elevator call request command and the authorized digital certificate are sent to the first wireless beacon 120. When establishing wireless communication with the second wireless beacon 130, the destination-floor registration command and the authorized digital certificate are sent to the second wireless beacon 130.

Correspondingly, the authentication system 20 includes a receiving module configured to receive, for example, the authorized digital certificate and the elevator service request command that are sent from the personal mobile terminal 200. The receiving module may specifically be implemented by a wireless signal broadcasting unit 121 provided in the first wireless beacon 120 and/or the second wireless beacon 130. In an embodiment, as shown in FIG. 3, a digital certificate storage unit 230 may further be provided in the personal mobile terminal 200. The digital certificate storage unit 230 stores the authorized digital certificate acquired by the digital certificate acquisition unit 220. To improve the security of the authorized digital certificate, the authorized digital certificate stored in the digital certificate storage unit is only accessible to the application component for an elevator service request installed on the personal mobile terminal 200. In other words, a third-party application component of the personal mobile terminal 200 cannot access the digital certificate storage unit 230 or the authorized digital certificate. When the application component for an elevator service request is deleted, the authorized digital certificate stored in the digital certificate storage unit 230 is also deleted.

It should be noted that if the authorized digital certificate has a corresponding authorization period, when the authorization period expires, the digital certificate acquisition unit 220 may further reacquire an authorized digital certificate having a new authorization period, so that an elevator service request function of the personal mobile terminal 200 can be continued.

In an embodiment, the elevator service request unit 240 may further be configured to check whether the authorized digital certificate is present or detect whether a digital certificate in the personal mobile terminal 200 is an authorized digital certificate before the elevator service request command is generated. For example, a digital certificate stored in the storage unit 230 is checked or detected in the foregoing manner. When an authorized digital certificate is found or a detected digital certificate is an authorized digital certificate, the elevator service request unit 240 can further generate an elevator service request command. When no authorized digital certificate is found or a detected digital certificate is an unauthorized digital certificate, the elevator service request unit 240 cannot generate the elevator service request command, and the passenger 90 cannot use the personal mobile terminal 200 to complete an elevator service request.

In the personal mobile terminal 200 in the foregoing example, the personal mobile terminal 200 does not need to verify the authorized digital certificate online (for example, only needs to acquire or update the authorized digital certificate online from the digital certificate management device 300). In addition, the authorized digital certificate may be sent together with the elevator service request command. As such, offline verification is performed conveniently in the elevator system 10 that can perform short range communication with the personal mobile terminal 200. It will be understood that the authorized digital certificate and the elevator service request command may be sent at the same time or may be sent successively.

Further, as shown in FIG. 3, a wireless signal broadcasting unit 121 is provided in the first wireless beacon 120 or the second wireless beacon 130, and configured to broadcast the first wireless signal 123 or the second wireless signal 133, for example, broadcast a wireless signal having particular signal strength or broadcast a wireless signal having particular signal strength in a fixed direction, so that the first wireless signal 123 or the second wireless signal 133 may cover predetermined ranges respectively. According to the invention, an offline verification module 122 is further provided in the first wireless beacon 120 or the second wireless beacon 130. The offline verification module 122 is configured to verify in an offline mode the authorized digital certificate received by the offline verification module 122 to implement authentication of the received elevator service request command.

It will be understood that during offline verification, the offline verification module 122 does not depend on online interaction with another component, for example, does not need to perform short range communication interaction with the personal mobile terminal 200, and further does not need to perform remote communication interaction with the digital certificate management device 300. As such, verification efficiency is high, and real-time online wireless connection between the offline verification module 122 and another component is not required. For example, when performing an elevator call operation, the passenger 90 does not perceive a delay of an elevator call request and is not subject to restriction of a remote communication signal condition.

In contrast, it is assumed that an authentication operation mode is performed online as described in the background art, the implementation of authentication depends on a remote communication connection between the personal mobile terminal 200 and the digital certificate management device 300. Once the remote communication connection is unstable or data transmission is relatively slow, an elevator service request of the passenger 90 has an obvious delay, or the personal mobile terminal 200 can only perform an elevator service request operation in an area with relatively strong remote communication signal coverage (for example, cannot complete an authentication process on a floor in an underground parking garage with poor signal quality). Therefore, the experience of automatic elevator call of the passenger 90 is greatly degraded.

The offline verification module 122 may return, to the personal mobile terminal 200 if the authorized digital certificate succeeds in the verification, a response result of the elevator system 10 to the elevator service request command. The response result is, for example, information indicating that an elevator call request succeeds and/or information about a scheduling arrangement.

It should be noted that the digital certificate management device 300 may be implemented by a server or, for example, a cloud. A specific implementation mode thereof is not limited.

The authentication system 20 in the foregoing embodiment may implement authentication of each elevator service request offline, so that problems caused by dependence on online authentication can be avoided, and the passenger 90 has desirable experience.

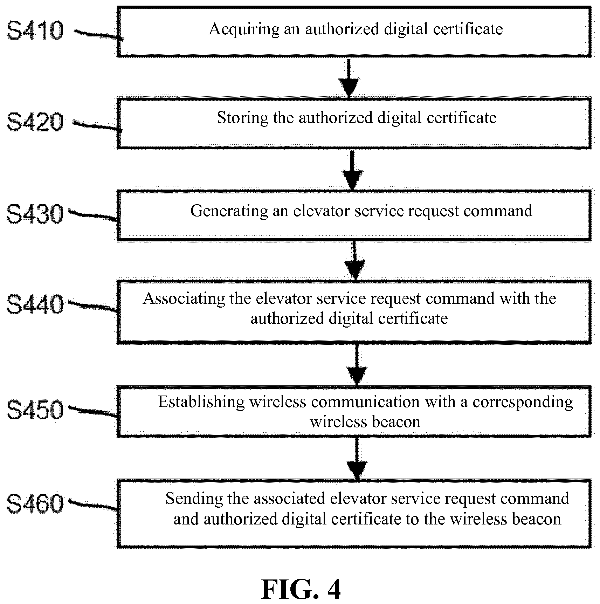

FIG. 4 is a flowchart of a method for an elevator service request according to an embodiment of the present invention. The method for an elevator service request in this embodiment of the present invention is described below through examples with reference to FIG. 1, FIG. 3, and FIG. 4.

First, in step S410, an authorized digital certificate is acquired. The step may be implemented by the digital certificate acquisition unit of the personal mobile terminal 200 shown in FIG. 3. The authorized digital certificate corresponding to the personal mobile terminal 200 may be acquired in an online mode from the digital certificate management device 300. Specifically, the digital certificate acquisition unit 220 sends information (for example, a short message) to the digital certificate management device 300 for obtaining an identity verification code. The identity verification code is returned to the digital certificate acquisition unit 220 by the digital certificate management device 300 according to the terminal identifier of the personal mobile terminal 200. The digital certificate acquisition unit 220 may further acquire, for example, download the authorized digital certificate from the digital certificate management device 300 based on input of the identity verification code (for example, input to a corresponding APP component).

In step S420, the authorized digital certificate is stored. In an embodiment, the authorized digital certificate is stored in the digital certificate storage unit 230 in the example shown in FIG. 3. The authorized digital certificate is stored in such a way that the authorized digital certificate is only accessible to an application component for an elevator service request installed on the personal mobile terminal 200, thus improving the security of the authorized digital certificate.

In step S430, a corresponding elevator service request command is generated. In the step, when a predetermined condition is met, generation of a corresponding elevator service request command may be triggered automatically. The elevator service request command may include an elevator call request command and/or a destination-floor registration command. The predetermined condition may be, for example, that the signal strength value of the sensed wireless signal needs to be greater than or equal to a corresponding threshold.

In an embodiment, it is further checked whether the authorized digital certificate is present or detected whether a digital certificate in the personal mobile terminal 200 is an authorized digital certificate before the elevator service request command is generated. For example, a digital certificate stored in the storage unit 230 is checked or detected in the foregoing manner. When an authorized digital certificate is found or a detected digital certificate is an authorized digital certificate, an elevator service request command is further generated. When no authorized digital certificate is found or a detected digital certificate is an unauthorized digital certificate, an elevator service request command cannot be generated.

In step S440, the elevator service request command is associated with the authorized digital certificate. In the step, it may be implemented that a currently generated elevator service request command may correspond to or be associated with the authorized digital certificate stored in the personal mobile terminal 200 that generates the elevator service request command.

In step S450, wireless communication is established with a corresponding wireless beacon. In the step, the personal mobile terminal 200 may scan or sense at any time a wireless signal (for example, the first wireless signal 123 or the second wireless signal 133) broadcast by the wireless beacon (for example the first wireless beacon 120 or the second wireless beacon 130) in the elevator system 10, so that if a wireless signal is sensed, the personal mobile terminal 200 may establish corresponding wireless communication with the wireless beacon (for example, the first wireless beacon 120 or the second wireless beacon 130). Specifically, a condition of establishing wireless communication may be predefined according to a requirement. For example, the condition is that the signal strength value of the sensed wireless signal needs to be greater than or equal to a corresponding threshold.

In step S460, the associated elevator service request command and authorized digital certificate are sent to the corresponding wireless beacon. In the step, both the elevator service request command and the corresponding associated authorized digital certificate are sent. Specifically, the elevator service request command and the authorized digital certificate may be sent to a corresponding wireless beacon by currently established wireless communication, so that the elevator system 10 can receive the elevator service request command of the personal mobile terminal 200 and can further receive the authorized digital certificate of the personal mobile terminal 200.

Here, the method process for an elevator service request of the personal mobile terminal 200 basically ends. It should be noted that if the authorized digital certificate has been obtained, the foregoing steps S420 to S460 may be repeated for each elevator service request. Certainly, if the authorized digital certificate turns invalid, step S410 may be performed again to update or reacquire a corresponding authorized digital certificate of the personal mobile terminal 200. It will be understood that a specific order in the method for an elevator service request in the foregoing example is not limited. For example, step S450 and step S420 may be performed at the same time, or step S450 may be performed before step S420.

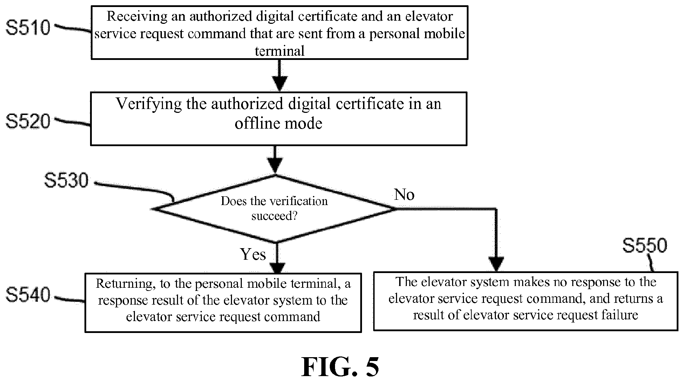

FIG. 5 is a flowchart of an authentication method for an elevator service request according to an embodiment of the present invention. The authentication method in this embodiment may be performed together with the method for an elevator service request in the example shown in FIG. 4, and may include the steps in the method for an elevator service request shown in FIG. 4. The authentication method in this embodiment of the present invention is described below through examples with reference to FIG. 1, FIG. 3, and FIG. 4.

Step S510: An authorized digital certificate and an elevator service request command that are sent from the personal mobile terminal 200 are received. The step may be, for example, implemented in the first wireless beacon 120 or the second wireless beacon 130 of the authentication system 20.

Step S520: The authorized digital certificate is verified offline. In the step, verification is performed in an offline mode, so that during the verification, the offline verification module 122 does not depend on online interaction with another component, for example, does not need short range communication interaction with the personal mobile terminal 200 and also does not need remote communication interaction with the digital certificate management device 300. As such, verification efficiency is high, and real-time online wireless communication between the offline verification module 122 and another component is not required. For example, when performing an elevator call operation, the passenger 90 does not perceive a delay of an elevator call request and is not subject to restriction of a remote communication signal condition.

Step S530: It is determined whether the authorized digital certificate succeeds in the verification. If "yes", the process proceeds to step S540, or if "no", the process proceeds to step S550.

Step S540: A response result of an elevator system to the elevator service request command is returned to the personal mobile terminal. In the step, if the verification succeeds, it indicates that a current elevator service request command is authenticated successfully. The elevator system 10 will make response such as a scheduling arrangement to the elevator service request command, and returns a corresponding response result to the personal mobile terminal 200.

Step S550: The elevator system makes no response to the elevator service request command, and returns a result of elevator service request failure. In the step, if verification fails, it indicates that a current elevator service request command fails to be authenticated. The elevator system 10 will not make a response such as a scheduling arrangement to the elevator service request command, and returns a result of elevator service request failure to the personal mobile terminal 200.

Here, the authentication method process in the authentication system 20 basically ends. It should be noted that if the authorized digital certificate has been obtained, the foregoing steps S520 to S540 may be repeated for an authentication operation of each elevator service request. Certainly, if the authorized digital certificate turns invalid, step S510 may be performed again to update or reacquire a corresponding authorized digital certificate of the personal mobile terminal 200.

In the foregoing process of the authentication method, authentication of each elevator service request may be implemented offline, so that problems caused by dependence on online authentication can be avoided, and the passenger 90 has desirable experience.

It should be noted that the system for an elevator service request in the foregoing embodiment of the present invention may be implemented by computer program instructions, for example, implemented by a dedicated APP. These computer program instructions may be provided to a processor of a general-purpose computer, a special-purpose computer or another programmable data processing equipment to constitute the personal mobile terminal 200 in an embodiment of the present invention. In addition, these instructions executed by the processor of the computer or another programmable data processing equipment may be used to create units or components configured to implement functions/operations designated in these flowcharts and/or blocks and/or one or more flow block diagrams.

It should be noted that the system (for example, the personal mobile terminal 200) for an elevator service request in the foregoing embodiment of the present invention may be implemented by computer program instructions, for example, implemented by a dedicated computer program. These computer program instructions may be provided to a processor of a general-purpose computer, a special-purpose computer or another programmable data processing equipment to constitute the system for an elevator service request according to an embodiment of the present invention. In addition, these instructions executed by the processor of the computer or another programmable data processing equipment may be used to create units or components configured to implement functions/operations designated in these flowcharts and/or blocks and/or one or more flow block diagrams.

It should be noted that the authentication system 20 for an elevator service request in the foregoing embodiment of the present invention may be implemented by computer program instructions. These computer program instructions may be provided to a processor of a general-purpose computer, a special-purpose computer or another programmable data processing equipment to constitute the personal mobile terminal 200 in an embodiment of the present invention. In addition, these instructions executed by the processor of the computer or another programmable data processing equipment may be used to create units or components configured to implement functions/operations designated in these flowcharts and/or blocks and/or one or more flow block diagrams.

In addition, these computer program instructions may be stored in a computer readable memory. These instructions may instruct the computer or another programmable processor to implement functions in a specific manner, so that these instructions stored in the computer readable memory constitute manufactured products including instruction components for implementing functions/operations designated in one or more blocks in flowcharts and/or block diagrams.

It should be noted that the elements (including flow charts and block diagrams in the accompanying drawings) disclosed and depicted herein imply logical boundaries between the elements. However, according to software or hardware engineering practices, the depicted elements and the functions of the elements may be implemented on a machine through a computer executable medium having a processor capable of executing program instructions stored thereon. The program instructions are used as a monolithic software structure, as a standalone software module, or as a module using external programs, codes, services, and so on, or any combination of them, and all such implementations may fall within the scope of the present disclosure.

Although different non-limiting implementation solutions have specific described components, the implementation solutions of the present invention are not limited to these specific combinations. A combination of some components or features in any non-limiting implementation solutions and features or components in any other non-limiting implementation solutions may be used within the scope of the appended claims.

Although specific step orders are shown, disclosed and claimed, it should be understood that the steps may be implemented, separated or combined in any sequence within the scope of the appended claims.

The foregoing description is exemplary rather than defined as limited thereto. Various non-limiting embodiments are disclosed herein, however, those of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

## Claims

1. An authentication method for an elevator service request, comprising steps of:
receiving an authorized digital certificate and an elevator service request command (S510), wherein the elevator service request command is generated (S430) by a personal mobile terminal (200, 200-1, 200-2), and the authorized digital certificate is acquired (S410) from a digital certificate management device (300) by the personal mobile terminal;
verifying the authorized digital certificate in an offline mode (S520) to implement authentication of the elevator service request command;
the method being **characterized in that**
in the verification step (S520), the authorized digital certificate is verified in the offline mode in a wireless beacon (120, 130) of the elevator system (10).

2. The authentication method of claim 1, wherein the authorized digital certificate and the elevator service request command are from the personal mobile terminal (200, 200-1, 200-2), and the authorized digital certificate is acquired (S410) based on authorization of the personal mobile terminal by the digital certificate management device (300).

3. The authentication method of claim 1 or 2, further comprising a step of:
returning, to the personal mobile terminal (200, 200-1, 200-2) if the authorized digital certificate succeeds (530) in the verification, a response result of the elevator system to the elevator service request command (S540).

4. The authentication method of any preceding claim, further comprising a step of:
acquiring, by the personal mobile terminal (200, 200-1, 200-2), the authorized digital certificate (S410) in an online mode from the digital certificate management device (300); and preferably wherein in the step of acquiring the authorized digital certificate, information is sent to the digital certificate management device for obtaining an identity verification code, and the authorized digital certificate is acquired from the digital certificate management device based on input of the identity verification code.

5. An authentication system (20) for an elevator service request, comprising:
a receiving module (121) configured to receive an authorized digital certificate and an elevator service request command, wherein the elevator service request command is generated by a personal mobile terminal (200, 200-1, 200-2), and the authorized digital certificate is acquired from a digital certificate management device (300) by the personal mobile terminal; and
an offline verification module (122) configured to verify the authorized digital certificate in an offline mode to implement authentication of the elevator service request command;
**characterized in that**
the offline verification module (122) is configured in a wireless beacon (120, 130, 130-1, 130-2) of an elevator system (10).

6. The authentication system of claim 5, wherein the receiving module (121) is configured in the wireless beacon (120, 130, 130-1, 130-2) of an elevator system (10); and optionally wherein the wireless beacon comprises a first wireless beacon (120) installed in an elevator landing area (410) of the elevator system and configured to broadcast a first wireless signal (123), wherein
the first wireless beacon is further configured to receive the sent authorized digital certificate and elevator service request command, wherein the elevator service request command is an elevator service request command indicating an elevator call request; and/or optionally wherein the wireless beacon comprises a second wireless beacon (130, 130-1, 130-2) installed in an elevator car (110, 110-1, 110-2) of the elevator system and configured to broadcast a second wireless signal (133), wherein
the second wireless beacon is further configured to receive the sent authorized digital certificate and elevator service request command, wherein the elevator service request command is an elevator service request command indicating a destination floor.

7. An elevator system (10), comprising the authentication system (20) for an elevator service request of any of claims 5 and 6.

## Patentansprüche

1. Authentifizierungsverfahren für eine Aufzugswartungsanforderung, das folgende Schritte umfasst:
Empfangen eines autorisierten digitalen Zertifikats und eines Aufzugswartungsanforderungsbefehls (S510), wobei der Aufzugswartungsanforderungsbefehl durch ein persönliches mobiles Endgerät (200, 200-1, 200-2) erzeugt wird (S430) und das autorisierte digitale Zertifikat durch das persönliche mobile Endgerät von einer Verwaltungsvorrichtung (300) für digitale Zertifikate erlangt wird (S410);
Verifizieren des autorisierten digitalen Zertifikats in einem Offline-Modus (S520), um die Authentifizierung des Aufzugswartungsanforderungsbefehls umzusetzen;
wobei das Verfahren **dadurch gekennzeichnet ist, dass** im Verifizierungsschritt (S520) das autorisierte digitale Zertifikat im Offline-Modus in einer drahtlosen Bake (120, 130) des Aufzugssystems (10) verifiziert wird.

2. Authentifizierungsverfahren nach Anspruch 1, wobei das autorisierte digitale Zertifikat und der Aufzugswartungsanforderungsbefehl von dem persönlichen mobilen Endgerät (200, 200-1, 200-2) stammen und das autorisierte digitale Zertifikat basierend auf einer Autorisierung des persönlichen mobilen Endgerätes durch die Verwaltungsvorrichtung (300) für digitale Zertifikate erlangt wird (S410).

3. Authentifizierungsverfahren nach Anspruch 1 oder 2, das ferner einen folgenden Schritt umfasst:
Zurückgeben eines Antwortergebnisses des Aufzugssystems auf den Aufzugswartungsanforderungsbefehl (S540) an das persönliche mobile Endgerät (200, 200-1, 200-2), wenn das autorisierte digitale Zertifikat bei der Verifizierung erfolgreich ist (530).

4. Authentifizierungsverfahren nach einem der vorhergehenden Ansprüche, das ferner einen folgenden Schritt umfasst:
Erlangen des autorisierten digitalen Zertifikats (S410) in einem Online-Modus von der Verwaltungsvorrichtung (300) für digitale Zertifikate durch das persönliche mobile Endgerät (200, 200-1, 200-2); und wobei vorzugsweise beim Schritt des Erlangens des autorisierten digitalen Zertifikats Informationen an die Verwaltungsvorrichtung für digitale Zertifikate gesendet werden, um einen Identitätsverifizierungscode zu erhalten, und das autorisierte digitale Zertifikat von der Verwaltungsvorrichtung für digitale Zertifikate basierend auf einer Eingabe des Identitätsverifizierungscodes erlangt wird.

5. Authentifizierungssystem (20) für eine Aufzugswartungsanforderung, umfassend:
ein Empfangsmodul (121), das dazu konfiguriert ist, ein autorisiertes digitales Zertifikat und einen Aufzugswartungsanforderungsbefehl zu empfangen, wobei der Aufzugswartungsanforderungsbefehl durch ein persönliches mobiles Endgerät (200, 200-1, 200-2) erzeugt wird und das autorisierte digitale Zertifikat durch das persönliche mobile Endgerät von einer Verwaltungsvorrichtung (300) für digitale Zertifikate erlangt wird; und
ein Offline-Verifizierungsmodul (122), das dazu konfiguriert ist, das autorisierte digitale Zertifikat in einem Offline-Modus zu verifizieren, um die Authentifizierung des Aufzugswartungsanforderungsbefehls umzusetzen;
**dadurch gekennzeichnet, dass**
das Offline-Verifizierungsmodul (122) in einer drahtlosen Bake (120, 130, 130-1, 130-2) eines Aufzugssystems (10) konfiguriert ist.

6. Authentifizierungssystem nach Anspruch 5, wobei das Empfangsmodul (121) in der drahtlosen Bake (120, 130, 130-1, 130-2) eines Aufzugssystems (10) konfiguriert ist; und wobei optional die drahtlose Bake eine erste drahtlose Bake (120) umfasst, die in einem Aufzugslandebereich (410) des Aufzugssystems installiert und dazu konfiguriert ist, ein erstes drahtloses Signal (123) auszusenden, wobei
die erste drahtlose Bake ferner dazu konfiguriert ist, das gesendete autorisierte digitale Zertifikat und den Aufzugswartungsanforderungsbefehl zu empfangen, wobei der Aufzugswartungsanforderungsbefehl ein Aufzugswartungsanforderungsbefehl ist, der eine Aufzugsrufanforderung angibt; und/oder wobei optional die drahtlose Bake eine zweite drahtlose Bake (130, 130-1, 130-2) umfasst, die in einer Aufzugskabine (110, 110-1, 110-2) des Aufzugssystems installiert und dazu konfiguriert ist, ein zweites drahtloses Signal (133) auszusenden, wobei die zweite drahtlose Bake ferner dazu konfiguriert ist, das gesendete autorisierte digitale Zertifikat und den Aufzugswartungsanforderungsbefehl zu empfangen, wobei der Aufzugswartungsanforderungsbefehl ein Aufzugswartungsanforderungsbefehl ist, der ein Zielstockwerk angibt.

7. Aufzugssystem (10), umfassend das Authentifizierungssystem (20) für eine Aufzugswartungsanforderung nach einem der Ansprüche 5 und 6.

## Revendications

1. Procédé d'authentification pour une demande de service d'ascenseur, comprenant les étapes de :
réception d'un certificat numérique autorisé et d'une commande de demande de service d'ascenseur (S510), dans lequel la commande de demande de service d'ascenseur est générée (S430) par un terminal mobile personnel (200, 200-1, 200-2), et le certificat numérique autorisé est acquis (S410) depuis un dispositif de gestion de certificat numérique (300) par le terminal mobile personnel ;
vérification du certificat numérique autorisé dans un mode hors ligne (S520) pour mettre en œuvre l'authentification de la commande de demande de service d'ascenseur ;
le procédé étant **caractérisé en ce qu'**à l'étape de vérification (S520), le certificat numérique autorisé est vérifié en mode hors ligne dans une balise sans fil (120, 130) du système d'ascenseur (10).

2. Procédé d'authentification selon la revendication 1, dans lequel le certificat numérique autorisé et la commande de demande de service d'ascenseur proviennent du terminal mobile personnel (200, 200-1, 200-2), et le certificat numérique autorisé est acquis (S410) sur la base de l'autorisation du terminal mobile personnel par le dispositif de gestion de certificat numérique (300).

3. Procédé d'authentification selon la revendication 1 ou 2, comprenant en outre une étape de :
renvoi, au terminal mobile personnel (200, 200-1, 200-2) si le certificat numérique autorisé réussit (530) la vérification, d'un résultat de réponse du système d'ascenseur à la commande de demande de service d'ascenseur (S540).

4. Procédé d'authentification selon une quelconque revendication précédente, comprenant en outre une étape :
d'acquisition, par le terminal mobile personnel (200, 200-1, 200-2), du certificat numérique autorisé (S410) en mode en ligne à partir du dispositif de gestion de certificat numérique (300) ; et de préférence dans lequel, à l'étape d'acquisition du certificat numérique autorisé, des informations sont envoyées au dispositif de gestion de certificat numérique pour obtenir un code de vérification d'identité, et le certificat numérique autorisé est acquis à partir du dispositif de gestion de certificat numérique sur la base de l'entrée du code de vérification d'identité.

5. Système d'authentification (20) pour une demande de service d'ascenseur, comprenant :
un module de réception (121) configuré pour recevoir un certificat numérique autorisé et une commande de demande de service d'ascenseur, dans lequel la commande de demande de service d'ascenseur est générée par un terminal mobile personnel (200, 200-1, 200-2), et le certificat numérique autorisé est acquis depuis un dispositif de gestion de certificat numérique (300) par le terminal mobile personnel ; et
un module de vérification hors ligne (122) configuré pour vérifier le certificat numérique autorisé dans un mode hors ligne pour mettre en œuvre l'authentification de la commande de demande de service d'ascenseur ;
**caractérisé en ce que**
le module de vérification hors ligne (122) est configuré dans une balise sans fil (120, 130, 130-1, 130-2) d'un système d'ascenseur (10).

6. Système d'authentification selon la revendication 5, dans lequel le module de réception (121) est configuré dans la balise sans fil (120, 130, 130-1, 130-2) d'un système d'ascenseur (10) ; et éventuellement dans lequel la balise sans fil comprend une première balise sans fil (120) installée dans une zone de palier d'ascenseur (410) du système d'ascenseur et configurée pour diffuser un premier signal sans fil (123), dans lequel la première balise sans fil est en outre configurée pour recevoir le certificat numérique autorisé envoyé et la commande de demande de service d'ascenseur, dans lequel la commande de demande de service d'ascenseur est une commande de demande de service d'ascenseur indiquant une demande d'appel d'ascenseur ; et/ou éventuellement dans lequel la balise sans fil comprend une seconde balise sans fil (130, 130-1, 130-2) installée dans une cabine d'ascenseur (110, 110-1, 110-2) du système d'ascenseur et configurée pour diffuser un second signal sans fil (133), dans lequel
la seconde balise sans fil est en outre configurée pour recevoir le certificat numérique autorisé envoyé et la commande de demande de service d'ascenseur, dans lequel la commande de demande de service d'ascenseur est une commande de demande de service d'ascenseur indiquant un étage de destination.

7. Système d'ascenseur (10), comprenant le système d'authentification (20) pour une demande de service d'ascenseur selon l'une quelconque des revendications 5 et 6.
